# EUROPÄISCHE PATENTSCHRIFT

(11) **EP 0 489 376 B1**
(45) Veröffentlichungstag und Bekanntmachung des Hinweises auf die Patenterteilung: **02.03.1994**
(21) Anmeldenummer: 91120625.8
(22) Anmeldetag: 30.11.1991
(51) Int. Cl.: B60P 7/08, F16G 11/12

(54) **Spannvorrichtung**
Tensioning device
Dispositif tendeur

(30) Priorität: 04.12.1990 DE 9016471 U
(43) Veröffentlichungstag der Anmeldung: 10.06.1992
(73) Patentinhaber: Dolezych, Udo, D-58313 Herdecke (DE)
(72) Erfinder: Graf, Rupprecht, Dipl.-Ing., W-5020 Frechen-Königsdorf (DE)

(56) Entgegenhaltungen:
- EP-A- 0 311 828
- DE-A- 2 315 330
- DE-C- 3 344 486
- DE-U- 8 022 576
- DE-U- 9 016 471
- US-A- 4 199 182

## Beschreibung

Die Erfindung betrifft eine Spannvorrichtung nach dem Oberbegriff des Patentanspruches 1. - Aus der US-A- 4 199 182 ist eine Spannvorrichtung der in Betracht gezogenen Art bekannt, bei der zum Spannen des Spannstranges das freie Ende des Spannhebels von der Spannvorrichtung wegbewegt werden muß. Der Bedienende muß demnach den Schwenkhebel vom Körper weggerichtet durch Stemmen betätigen. Die hierbei aufbringbare Druckkraft ist, bedingt durch den menschlichen Körperbau, wesentlich geringer als eine in anderer Richtung aufbringbare Zugkraft. Ausserdem wird mit der Stemmkraft die Wirbelsäule zusätzlich belastet, was zu Verrenkungen bzw. Bandscheibenschäden führen kann.

Infolgedessen kann diese und können gleichartig ausgebildete Vorrichtungen aus ergonomischer Sicht nicht befriedigen. Dies trifft insbesondere auf Fälle zu, bei welchen Die Spannvorrichtung zum Niederzurren von Lasten auf Transportfahrzeugen zum Einsatz gelangt.

Aus der DE-C- 3 344 486 ist eine dem Oberbegriff des Anspruchs 1 gattungsgleiche Spannvorrichtung bekannt, deren Ausbildung die Aufgabe zugrundegelegt ist, eine derartige Spannvorrichtung so umzugestalten, daß eine bequemere Handhabung ermöglicht wird, worunter zu verstehen ist, daß ein Benutzer beim Betätigen des Schwenkhebels sein Körpergewicht mit einzusetzen vermag.

Auf diese Weise sollen sich hohe, kurze Spannkraft-Spannungsspitzen realisieren lassen, welche die Einleitung hoher Vorspannkräfte in den Spannstrang ermöglichen.

Diese Aufgabe soll nach dem Kennzeichnen des Patentanspruchs 1 dadurch gelöst werden, daß der Zahnrücken des Rastzahns, der in der Sperrstellung des Klinkenrades jeweils mit dem Sperrmechanismus im Eingriff steht, dem freien Ende des Schwenkhebels derart abgewandt ist daß der Gurt durch eine Bewegung des Schwenkhebels zum Anschlußteil spannbar ist. Einfach ausgedrückt, wird bei dem Klinkenrad ein Zahnrückenverlauf gegen Uhrzeigersinn verwirklicht und werden beim Arbeitshub Schwenkhebel und Anschlußteil gleichsam zusammengedrückt.

Aus dem DE-U- 8 022 576 ist bereits eine Spannratsche bekannt, bei welcher ein Klinkenrad mit Zahnrückenverlauf gegen Uhrzeigersinn verwirklicht ist sowie Spannhebel und Anschlußteil im Zuge des Arbeitshubes zusammengedrückt werden. Insoweit ist durch das im Verhältnis zum vorgenannten Patent DE-C 3 344 486 vorveröffentlichte, ältere Recht das Kennzeichnen des Patentanspruchs 1 vom Patent DE 33 44 486 identisch vorweggenommen. Unterschiede bestehen im wesentlichen lediglich darin, daß bei der bekannten Ausführungsform nach dem DE-U- 8 022 576 eine Antriebswalze mit Gegendruckrollen verwirklicht ist und nach Abschluß des Spannvorganges die von den beiden Gurten auf die Spannvorrichtung einwirkenden Spannkräfte nicht parallel zur Auflagefläche der Spannvorrichtung gerichtet sind, weil Schwenkhebel und Anschlußteil praktisch übereinander angeordnet sind.

Diese Merkmale gehören jedoch zum vorbekannten Stand der Technik. Gleichwohl mögen die vorbekannten Spannvorrichtungen allesamt nicht in allen Fällen den Anforderungen der Praxis genügen, dann nämlich nicht, wenn das aufzuwickelnde Gurtbandende beispielsweise von unten her in die Wickelwelle eingeführt werden soll, wogegen das andere Anschlußende der Spannvorrichtung an eine Nähschlaufe anzuschließen ist.

Ein solcher Fall kann sich beispielsweise ergeben, wenn eine schwere Last oder Kiste, noch dazu mit vergleichsweise scharfen Kanten, durch einen mit Kantenschutz versehenen Zurrgurt niedergezurrt werden soll. Dabei wird vielfach nur an der Seite, an welcher die Spannvorrichtung angesetzt ist, die erforderliche Zurrkraft erreicht, wogegen auf der Gegenseite infolge Reibungsverlusten des Zurrsystems im Bereich der Kantenumlenkungen mindestens 50% und mehr an Zurrkraft verlorengehen In einem solchen Falle - ebenso wie in vielen ähnlich gelagerten Fällen - ist es dann erforderlich, an beiden Seiten der Last Spannvorrichtungen anzusetzen.

Der Erfindung liegt die Aufgabe zugrunde, eine Spannvorrichtung der eingangs genannten Art derart weiterzubilden und dabei zu vereinfachen, daß das auf die Antriebswelle aufzuwickelnde freie Gurtende unbeschadet der Stellung bzw. Lage der Ratsche in dem Zurrsystem von jeder ihrer Anschlußseiten, rechts oder links von der Antriebswelle, eingefädelt werden kann. Damit ergibt sich auch die Möglichkeit, je nach Anordnung des Zurrsystems im Verhältnis zu einer zu sichernden Last eine Ratsche derart anzubringen, daß sich in allen denkbaren Fällen optimale Betätigungsverhältnisse ergeben.

Die der Erfindung zugrundegelegte Aufgabe wird durch die Merkmale des kennzeichnenden Teils von Patentanspruch 1 gelöst.

Die erfindungsgemäße Spannvorrichtung bietet den Vorteil, daß auf überraschend einfache und zweckmäßige Art und Weise das auf die Antriebswelle aufzuwickelnde freie Gurtbandende von beiden Anschlußenden der Spannvorrichtung in diese eingeführt werden kann. Damit steht es dem Betätiger völlig frei, die optimale Zuordnung der Ratsche bzw. deren Arbeitsrichtung im Zurrsystem in beliebiger Weise zu bestimmen.

Beim Erfindungsgegenstand ist eine Ausgestaltung verwirklicht, bei welcher das Gesperrerad mit Zahnrückenverlauf gegen Uhrzeigersinn ausgebildet ist sowie der Schwenkhebel und der Ratschenkörper im Zuge des Arbeitshubes zusammengedrückt werden. Dies wird vorteilhaft dadurch erreicht, daß der Zahnrücken des Sperrzahnes, der in der Sperrstellung des Gesperrerades jeweils mit dem Sperrmechanismus in Eingriff befindlich ist, dem freien Ende des Antriebshebels zugewandt ist. Besonders hohe, kurze Spannkraftspannungsspitzen lassen sich dadurch realisieren, daß nach einem weiteren Vorschlag das Gesperrerad mit wenigstens zwanzig Zähnen im Winkelabstand radial von jeweils 18° ausgebildet ist. Ein sicherer Halt des Gesperremechanismus wird weiterhin dadurch erreicht, daß die Sperrzähne etwa um 5° an ihren Sperrflanken hinterschnitten sind, daß der Sperrmechanismus ein gegen die Wirkung von Federn in Schlitzführungen der gabelartigen Verlängerungen verschiebbar gelagertes Sperrelement aufweist, und dieses eine Platte mit einer Schneide ist, welche zum sicheren Eingriff und Halt in den Zahngründen der Sperrzähne mit einem Winkel von ca. 60° hinterschnitten ausgebildet ist.

Weitere vorteilhafte Ausgestaltungen sind entsprechend den Merkmalen von Unteransprüchen vorgesehen. Die Erfindung wird anhand eines schematisch dargestellten Ausführungsbeispiels näher erläutert. Die Zeichnungen zeigen:
- Fig. 1: eine Ansicht einer Spannvorrichtung mit Darstellung der Einfädelungsmöglichkeiten freier Gurtenden von rechts oder links der Antriebswelle,
- Fig. 2: eine Draufsicht auf die Spannvorrichtung gemäß Fig. 1, und
- Fig. 3: eine vergrößerte Detaildarstellung eines Gesperrerades im Eingriff mit einem Sperrelement.

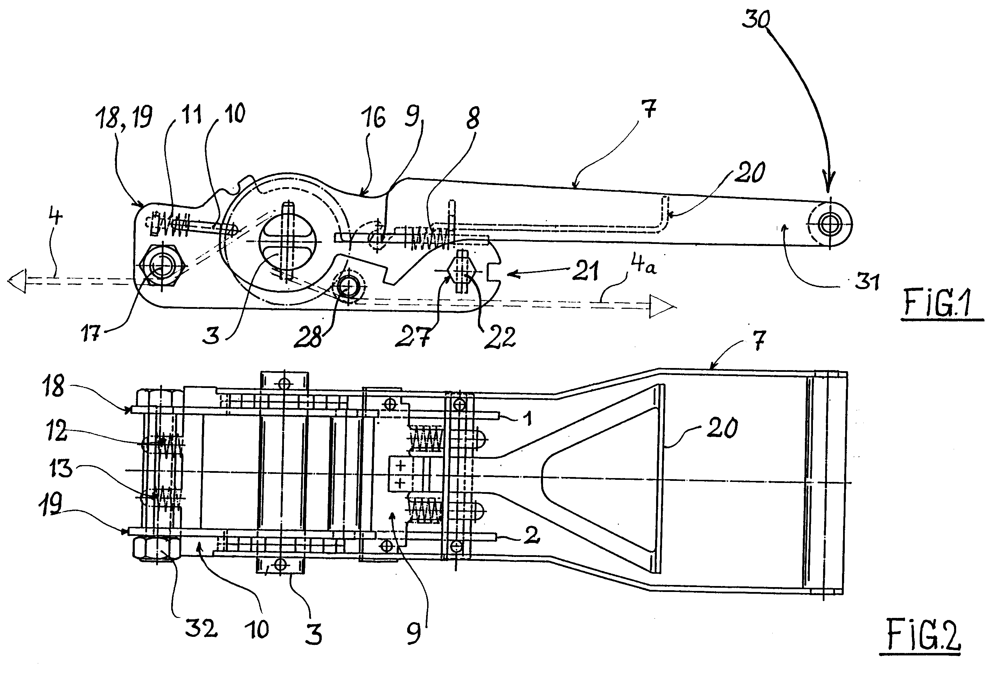

Eine Zusammenschau der Fig. 1 und 2 zeigt den aus Seitenplatten 1, 2 der Ratsche bestehenden Grundkörper. Zwischen diesen ist eine Antriebswelle 3 zum Aufwickeln eines Zurrgurtes 4 bzw. 4a vorgesehen. Die Antriebswelle 3 weist beidseitig je ein mit ihr drehfest verbundenes, Sperrzähne 6a, 6b aufweisendes Gesperrerad 5 auf. Über einen Schwenkhebel 7 ist die Antriebswelle 3 in Drehung versetzbar, wofür am Schwenkhebel 7 ein mit dem Gesperrerad 5 zusammenwirkendes Mitnehmerelement 9 gegen die Wirkung von Rückstellfedern 8 verschiebbar gelagert ist. Weiterhin weist der Schwenkhebel 7 rechts und links je eine Steuerkurve 16 zum Überführen eines dem Gesperrerad 5 zugeordneten Sperrmechanismus 10,11 in eine unwirksame Stellung auf. Die Sperrzähne 6 sind derart richtungsorientiert angeordnet, daß sie beim Betätigen des Schwenkhebels 7 in Richtung eines Arbeitshubes entsprechend dem Pfeil 30 vom Mitnehmerelement 9 angetrieben, dagegen beim Rückhub in der umgekehrten Richtung im Leerlauf überfahren werden.

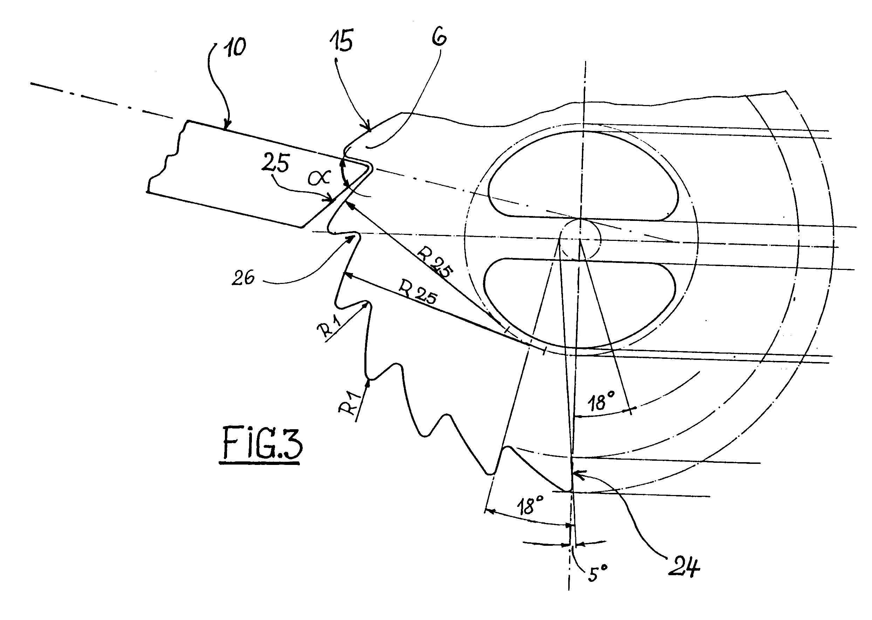

Die Vorrichtung weist an dem der Antriebswelle 3 entfernteren Ende, dem sogenannten Anschlußteil 21, zwei gegenüberliegende hexagonale Ausnehmungen 27 zur Aufnahme eines hexagonalen oder auch runden Anschlußbolzens 22 auf. Die Rechteckform der Bohrungen 27 ist vorteilhaft für einen beispielsweise erforderlichen Anschluß eines Zurrspannungsmeßgerätes, weil bei dessen Ausbildung ebenfalls mit hexagonalen Ausnehmungen an seinen Anschlußenden mit Hilfe eines Verbindungsbolzens von sechseckigem Querschnitt eine starre Ankoppelung auf einfachste Weise erreicht wird. Der Sperrmechanismus 10, 11 ist in gabelartigen Verlängerungen 18, 19 der Spannvorrichtung hinter den Gesperrerädern 5a, 5b an dem dem Anschlußelement 22 entgegengesetzten Ende des Ratschenkörpers angeordnet. Dadurch wird erreicht, daß der Zahnrücken 15 des Sperrzahnes 6, der in der Sperrstellung eines Gesperrerades 5a, 5b jeweils mit dem Sperrmechanismus 10, 11 im Eingriff steht, dem freien Ende 31 des Antriebshebels 7 zugewandt ist. Zur Realisierung hoher, kurzer Spannkraftspannungsspitzen ist eine weitere Ausgestaltung derart vorgesehen, daß das Gesperrerad 5 mit wenigstens zwanzig Zähnen 6 im radialen Winkelabstand von jeweils 18° ausgebildet ist, wie dies im Detail in der Fig. 3 dargestellt ist. Hieraus geht weiter hervor, daß die Sperrzähne 6 mit etwa 5° ihrer Sperrflanken 24 hinterschnitten sind. Dadurch wird ein gezielt begrenzter Selbsthemmungseffekt des Sperrmechanismus 10, 11 erreicht. Dieser ist im übrigen mit einer gegen die Wirkung von Federn 12, 13 in Schlitzführungen 11 der gabelartigen Verlängerungen 18, 19 verschiebbar gelagerten Sperrplatte 10 ausgebildet.

Die Sperrplatte weist eine Schneide 25 auf, die zum sicheren Eingriff und Halt in den Zahngründen 26 der Sperrzähne 6a, 6b mit einem Winkel von ca. 60° hinterschnitten ausgebildet ist (Fig.3). Am Anschlußteil 21 sind zwei gegenüberliegende hexagonale Ausnehmungen 27 für einen Anschlußbolzen 22 und folgerichtig wegen der Möglichkeit der Gurteinfädelung von beiden Enden des Ratschenkörpers ist am antipodischen Ende der Ratsche an den gabelartigen Verlängerungen 18, 19 ein Anschluß- bzw. Umlenkbolzen 17 mit der Mutter 32 angeordnet. Weiterhin ist zur Erleichterung beim Einfädeln eines freien Gurtbandendes 4a vom Anschlußteil 21 her in einer Anordnung schräg unterhalb der Antriebswelle 3 sowie in Richtung gegen das Anschlußelement 22 ein die Seitenplatten 1, 2 verbindender Führungsbolzen bzw. Führungssteg 28 angeordnet. Weiterhin weist die Ratsche in an sich bekannter Weise am Schwenkhebel einen Auslösehebel 20 zum Unwirksammachen des Mitnehmerelementes 9 durch Ziehen gegen die Rückstellkraft der Federn 8 auf. Mit der Bezugsziffer 16 ist weiterhin derjenige Teil der Steuerkurve bezeichnet, durch welchen das Sperrelement 10 aus seiner gezeigten wirksamen Sperrstellung in eine unwirksame Stellung z.B. für das Lösen und Abwickeln des Gurtbandes gebracht werden kann. Im übrigen wird die Funktion einer gemäß Oberbegriff des Anspruchs 1 ausgebildeten Ratsche als bekannt vorausgesetzt.

Weil das Spannelement nach der Erfindung durch die besondere Anordnung seiner Funktionselemente derart ausgebildet ist, daß es auf einfache Weise eine Einfädelung des Gurtes 4 von beiden Seiten des Ratschenkörpers ermöglicht, ist eine erstmalige universell anwendbare und fortschrittliche Weiterentwicklung des Spannelementes ermöglicht worden.

## Patentansprüche

1. Spannvorrichtung für Zurrmittel wie Zurrgurte (4, 4a) mit einer zum Aufwickeln des Zurrmittels vorgesehenen, über einen Schwenkhebel (7) in Drehung versetzbaren Antriebswelle (3) und wenigstens einem drehfest mit dieser verbundenen, Sperrzähne (6) aufweisenden Gesperrerad (5), wobei am Schwenkhebel (7) ein mit dem Gesperrerad (5) zusammenwirkendes Mitnehmerelement (9) gegen die Wirkung eines Rückstellelementes (8) verschiebbar gelagert und wenigstens eine Steuerkurve (16) zum Überführen eines dem Gesperrerad (5) zugeordneten Sperrmechanismus (10,11) in eine unwirksame Stellung ausgebildet ist und die Sperrzähne (6) derart richtungsorientiert angeordnet sind, daß sie beim Betätigen des Schwenkhebels (7) in Richtung eines Arbeitshubes vom Mitnehmerelement (9) angetrieben, dagegen beim Rückhub in der umgekehrten Richtung im Leerlauf überfahren werden, und wobei die Vorrichtung an dem der Antriebswelle (3) entfernteren Ende ein Anschlußelement (22) für das Zurrmittel aufweist, **dadurch** **gekennzeichnet**, daß der Sperrmechanismus (10, 11) in gabelartigen Verlängerungen (18, 19) der Spannvorrichtung hinter dem Gesperrerad (5) an dem dem Anschlußelement (22) entgegengesetzten Ende angeordnet ist.

2. Vorrichtung nach Anspruch 1, dadurch gekennzeichnet, daß der Zahnrücken (15) des Sperrzahnes (6), der in der Sperrstellung des Gesperrerades (5) jeweils mit dem Sperrmechanismus (10, 11) im Eingriff steht, dem freien Ende des Antriebshebels (7) zugewandt ist.

3. Vorrichtung nach den Ansprüchen 1 und 2, dadurch gekennzeichnet, daß das Gesperrerad (5) mit Wenigstens zwanzig Zähnen (6) im Winkelabstand von jeweils 18° ausgebildet ist.

4. Vorrichtung nach einem oder mehreren der Ansprüche 1 bis 3, dadurch gekennzeichnet, daß die Sperrzähne (6) mit etwa 5° an ihren Sperrflanken (24) hinterschnitten sind.

5. Vorrichtung nach einem oder mehreren der Ansprüche 1 bis 4, dadurch gekennzeichnet, daß der Sperrmechanismus (10, 11) ein gegen die Wirkung wenigstens einer Feder (12, 13) in Schlitzführungen (11) der gabelartigen Verlängerungen (18, 19) verschiebbar gelagertes Sperrelement (10) aufweist.

6. Vorrichtung nach einem oder mehreren der Ansprüche 1 bis 5, dadurch gekennzeichnet, daß das Sperrelement (10) eine Platte mit einer Schneide (25) aufweist, die zum sicheren Eingriff und Halt in den Zahngründen (26) der Sperrzähne (6) mit einem Winkel von ca. 60° hinterschnitten ausgebildet ist.

7. Vorrichtung nach einem der Ansprüche 1 bis 6, dadurch gekennzeichnet, daß am Anschlußteil (21) zwei gegenüberliegende hexagonale Ausnehmungen (27) zur Aufnahme eines Anschlußbolzens (22) ausgebildet sind.

8. Vorrichtung nach einem der Ansprüche 1 bis 7, dadurch gekennzeichnet, daß schräg unterhalb der Antriebswelle (3) und in Richtung gegen das Anschlußelement (22) ein die Seitenplatten (1, 2) verbindender Führungsbolzen (28) angeordnet ist.

9. Vorrichtung nach einem der Ansprüche 1 bis 8, dadurch gekennzeichnet, daß in den gabelartigen Verlängerungen (18, 19) unterhalb des Sperrmechanismus (10, 11) ein Führungs- und Umlenkbolzen (17) angeordnet ist.

## Claims

1. Tensioning apparatus for locking means, such as locking belts (4, 4a), having a drive shaft (3), which is provided for the winding of the locking means and can be set in rotation by means of a pivot lever (7), and at least one ratchet wheel (5), which is non-rotatably connected to said drive shaft and has locking teeth (6), an entrainment member (9) co-operating with the ratchet wheel (5) and being mounted on the pivot lever (7) so as to be displaceable in opposition to the action of a return means (8), and at least one cam (16) being provided to move a locking mechanism (10, 11), associated with the ratchet wheel (5), into an inoperative position, and the locking teeth (6) being disposed in such a directionally orientated manner that they are driven by the entrainment member (9) upon actuation of the pivot lever (7) in the direction of a working movement, but they are moved to the idling position upon the rearward movement in the reverse direction, and the apparatus having a connection member (22) for the locking means at the end further remote from the drive shaft (3), characterised in that the locking mechanism (10, 11) is disposed in bifurcated extensions (18, 19) of the tensioning apparatus behind the ratchet wheel (5) situated at the end opposite the connection member (22).

2. Apparatus according to claim 1, characterised in that the back (15) of each locking tooth (6), which is in engagement with the locking mechanism (10, 11) in the locked position of the ratchet wheel (5), faces the free end of the pivot lever (7).

3. Apparatus according to claims 1 and 2, characterised in that the ratchet wheel (5) is provided with at least twenty teeth (6) having an angular spacing of 18° from one another.

4. Apparatus according to one or more of claims 1 to 3, characterised in that the locking teeth (6) have a tapering of about 5° at their locking walls (24).

5. Apparatus according to one or more of claims 1 to 4, characterised in that the locking mechanism (10, 11) has a locking member (10), which is mounted in guide slots (11) in the bifurcated extensions (18, 19) so as to be displaceable in opposition to the action of at least one spring (12, 13).

6. Apparatus according to one or more of claims 1 to 5, characterised in that the locking member (10) has a face with a cutting edge (25), which tapers at an angle of approx. 60° for secure engagement and retention in the bases (26) of the locking teeth (6).

7. Apparatus according to one of claims 1 to 6, characterised in that two oppositely situated hexagonal recesses (27) for receiving a connection pin (22) are provided in the connection member (21).

8. Apparatus according to one of claims 1 to 7, characterised in that a guide pin (28), connecting the lateral plates (1, 2), is disposed inclinedly below the drive shaft (3) and in a direction towards the connection member (22).

9. Apparatus according to one of claims 1 to 8, characterised in that a guide and link pin (17) is disposed in the bifurcated extensions (18, 19) below the locking mechanism (10, 11).

## Revendications

1. Dispositif tendeur pour moyens d'amarrage tels qu'une sangle d'amarrage (4, 4a), pourvu d'un arbre d'entraînement (3) prévu pour enrouler les moyens d'amarrage et pouvant être amené à tourner au moyen d'un levier pivotant (7) et comportant au moins une roue à rochet (5) montée non-tournante sur cet arbre et présentant des dents de blocage (6), un entraîneur (9) agissant avec la roue à rochet (5) étant monté sur le levier pivotant (7) et susceptible d'être déplacé contre l'action d'un élément de rappel (8), au moins une courbure de commande (16) étant réalisée pour faire passer un mécanisme de blocage (10, 11) associé à la roue à rochet (5) dans une position non-active, les dents de blocage (6) étant orientées de telle sorte qu'elle soient entraînées par l'entraîneur (9) lorsque le levier pivotant (7) est actionné dans le sens d'une course de travail, mais qu'elles passent en marche à vide lorsqu'il y a actionnement dans le sens inverse, le dispositif présentant, à l'extrémité éloignée de l'arbre d'entraînement (3), un élément de raccordement (22) pour les moyens d'amarrage, caractérisé en ce que le mécanisme de blocage (10, 11) est logé dans des prolongements (18, 19) en forme de fourche du dispositif tendeur, derrière la roue à rochet (5), à l'extrémité opposée à l'élément de raccordement (22).

2. Dispositif selon la revendication 1, caractérisé en ce que le dos (15) de la dent de blocage (6) qui, en position de blocage de la roue à rochet (5) engrène respectivement avec le mécanisme de blocage (10, 11), est orienté en direction de l'extrémité libre du levier d'entraînement (7).

3. Dispositif selon les revendications 1 et 2, caractérisé en ce que la roue à rochet (5) présente au moins vingt dents (6) présentant un espacement angulaire de respectivement 18°.

4. Dispositif selon l'une ou plusieurs des revendications 1 à 3, caractérisé en ce que les dents de blocage (6) sont taillées selon une contre-dépouille d'environ 5° sur leurs flancs de blocage (24).

5. Dispositif selon l'une ou plusieurs des revendications 1 à 4, caractérisé en ce que le mécanisme de blocage (10, 11) comporte un élément de blocage (10) monté mobile, dans des fentes de guidage (11) des prolongements (18, 19) en forme de fourche, à l'encontre de l'action d'au moins un ressort (12, 13).

6. Dispositif selon l'une ou plusieurs des revendications 1 à 5, caractérisé en ce que l'élément de blocage (10) présente une partie plate avec une arête (25) qui est taillée selon une contre-dépouille avec un angle d'environ 60°, afin qu'elle engrène et reste de façon sûre dans les fonds (26) des dents de blocage (6).

7. Dispositif selon l'une des revendications 1 à 6, caractérisé en ce que deux évidements (27) hexagonaux et opposés sont formés sur la partie de raccordement (21) pour recevoir un boulon de raccordement (22).

8. Dispositif selon l'une des revendications 1 à 7, caractérisé en ce qu'un boulon de guidage (28) reliant les plaques latérales (1, 2) est disposé sous et en oblique par rapport à l'arbre d'entraînement (3) et dans le sens opposé par rapport à l'élément de raccordement (22).

9. Dispositif selon l'une des revendications 1 à 8, caractérisé en ce qu'un boulon (17) de guidage et de renvoi est disposé dans les prolongements (18, 19) en forme de fourche, sous le mécanisme de blocage (10, 11).
